# EUROPÄISCHE PATENTSCHRIFT

(11) **EP 4 505 211 B1**
(45) Veröffentlichungstag und Bekanntmachung des Hinweises auf die Patenterteilung: **21.10.2026**
(21) Anmeldenummer: 23709664.9
(22) Anmeldetag: 03.03.2023
(51) Int. Cl.: G01S 7/53, G01S 7/41, G01S 7/48, G01S 7/539, G01S 13/72, G01S 13/86, G01S 13/931, G01S 15/58, G01S 15/66, G01S 15/86, G01S 15/931, G01S 17/58, G01S 17/66, G01S 17/87, G01S 17/931, G01S 13/58

(54) **VERFAHREN ZUR PRÄDIKTION VON TRAJEKTORIEN VON OBJEKTEN**
METHOD FOR PREDICTING TRAJECTORIES OF OBJECTS
PROCÉDÉ DE PRÉDICTION DE TRAJECTOIRES D'OBJETS

(30) Priorität: 08.04.2022 DE 102022001208
(43) Veröffentlichungstag der Anmeldung: 12.02.2025
(73) Patentinhaber: Mercedes-Benz Group AG, 70372 Stuttgart (DE)
(72) Erfinder: SCHMIDT, Julian, 78256 Steißlingen (DE); GRITSCHNEDER, Franz, 73728 Esslingen (DE); JORDAN, Julian, 72074 Tübingen (DE); RUPPRECHT, Jan, 71083 Herrenberg (DE)
(74) Vertreter: Novagraaf Group
(86) Internationale Anmeldenummer: PCT/EP2023/055517
(87) Internationale Veröffentlichungsnummer: WO 2023/194009

(56) Entgegenhaltungen:
- WO-A1-2018/231616
- US-A1- 2022 035 376
- US-B2- 11 017 550

## Beschreibung

Die Erfindung betrifft ein Verfahren zur Prädiktion von Trajektorien von Objekten in einer Umgebung eines Fahrzeugs.

Die Prädiktion von am Verkehr teilnehmenden Fahrzeugen bildet einen wichtigen Bestandteil autonomer Fahrzeuge. Eine zuverlässige und sichere Bewegungsplanung ist nur dann möglich, wenn auch diese Prädiktion von hoher Qualität ist.

Aus der DE 10 2019 215 147 A1 ist ein Verfahren zur Führung eines Ego-Fahrzeugs mit folgenden Schritten bekannt:
- Erfassung eines äußeren Umfelds des Ego-Fahrzeugs und Ausgabe von Umfeldinformationen aus dem erfassten Umfeld;
- Neuronal netzwerkbasiertes Prognostizieren von Trajektorien von dem Ego-Fahrzeug umgebenden Verkehrsteilnehmern basierend auf den ausgegebenen Umfeldinformationen;
- Regelbasiertes Prognostizieren der Trajektorien der das Ego-Fahrzeug umgebenden Verkehrsteilnehmer basierend auf den ausgegebenen Umfeldinformationen;
- Ermitteln eines Kollisionsrisikos des Ego-Fahrzeugs mit den umgebenden Verkehrsteilnehmern jeweils für die neuronal netzwerkbasiert und regelbasiert prognostizierten Trajektorien;
- Auswahl der neuronal netzwerkbasiert oder regelbasiert prognostizierten Trajektorie zum jeweiligen Verkehrsteilnehmer in Abhängigkeit der ermittelten Kollisionsrisiken;
- Bereitstellen einer Ego-Trajektorie für die Führung des Ego-Fahrzeugs in Abhängigkeit der ausgewählten prognostizierten Trajektorien der Verkehrsteilnehmer.

Weiterhin ist aus der DE 10 2019 216 290 A1 ein Verfahren zum Verfolgen von einem Objekt in Abhängigkeit von Sensordaten eines Umfeldsensors für einen Betrieb eines Fahrzeugs bekannt. Dabei weist das Fahrzeug den Umfeldsensor auf und die Sensordaten repräsentieren eine von dem Umfeldsensor erfasste Umgebung um das Fahrzeug. Das Verfahren umfasst die Schritte:
- Auswählen einer Teilmenge der Sensordaten in Abhängigkeit von einem aktuellen Zustand des verfolgten Objekts;
- Anwenden eines Verfahrens des maschinellen Lernens auf die ausgewählte Teilmenge der Sensordaten, um aus den Daten Informationen über das verfolgte Objekt zu erhalten;
- Aktualisieren des aktuellen Zustands des verfolgten Objekts in Abhängigkeit von erhaltenen Informationen.

Die in der WO 2018/231616 A1 beschriebenen Systeme, Verfahren und Vorrichtungen dienen der Segmentierung von Voxeln, die dreidimensionalen Daten darstellen, um statische und dynamische Objekte zu identifizieren. LIDAR-Daten können von einem Wahrnehmungssystem für ein autonomes Fahrzeug erfasst und in einem Voxelraum dargestellt werden. Zu den Operationen gehört die Bestimmung einer befahrbaren Oberfläche durch Analyse einzelner Voxel, um die Ausrichtung einer Oberflächennormalen einer planaren Näherung der voxelisierten Daten relativ zu einer Referenzrichtung zu bestimmen. Clustering-Techniken können verwendet werden, um eine Bodenebene mit einer Vielzahl lokal flacher Voxel zu erzeugen. Bodenebenendaten können aus dem Voxelraum ausgeklammert und die verbleibenden Voxel zur Objektbestimmung geclustert werden. Voxeldaten können im Zeitverlauf analysiert werden, um dynamische Objekte zu bestimmen. Segmentierungsinformationen zu Bodenvoxeln, statischen und dynamischen Objekten können einem Tracker und/oder Planer im Zusammenhang mit dem Betrieb des autonomen Fahrzeugs bereitgestellt werden.

Aus der US 2022/035376 A1 ein Verfahren bekannt umfassend die folgenden Schritte:
- Erfassen von LIDAR-, Radar- und Kartendaten; Eingeben der LIDAR-, Radar- und Kartendaten in ein Netzwerkmodell;
- Transformieren der Radardaten durch das Netzwerkmodell in ein Koordinatensystem, das einem letzten Radardurchlauf in den Radardaten zugeordnet ist;
- Generieren eines oder mehrerer Merkmale durch das Netzwerkmodell für die LIDAR-Daten, die transformierten Radardaten und die Kartendaten; das Kombinieren der generierten Merkmale durch das Netzwerkmodell zu fusionierten Merkmalsdaten;
- Generieren von Vorhersagedaten durch das Netzwerkmodell, die zumindest teilweise auf den fusionierten Merkmalsdaten basieren; und
- Empfangen der Vorhersagedaten als Ausgabe des Netzwerkmodells. Die Vorhersagedaten können dabei eine jeweilige prognostizierte Trajektorie für einen zukünftigen Zeitraum für ein oder mehrere erkannte Objekte enthalten.

Der Erfindung liegt die Aufgabe zu Grunde, ein neuartiges Verfahren zur Prädiktion von Trajektorien von Objekten in einer Umgebung eines Fahrzeugs anzugeben.

Die Aufgabe wird erfindungsgemäß gelöst durch ein Verfahren, welches die im Anspruch 1 angegebenen Merkmale aufweist.

Vorteilhafte Ausgestaltungen der Erfindung sind Gegenstand der Unteransprüche.

Bei einem erfindungsgemäßen Verfahren zur Prädiktion von Trajektorien von Objekten in einer Umgebung eines Fahrzeugs werden mittels Umfeldsensoren Sensorrohdaten einer Umgebung des Fahrzeugs erfasst, wobei die Sensorrohdaten in einer Mehrzahl von aufeinanderfolgenden Zeitschritten vorverarbeitet werden, um Objekthypothesen für Objekte in der Umgebung des Fahrzeugs zu erstellen, wobei auf Basis der Objekthypothesen die Sensorrohdaten segmentiert und der jeweiligen Objekthypothese zugeordnet werden, wobei die zu der jeweiligen Objekthypothese zugehörigen Sensorrohdaten mittels eines lernbasierten Encoder-Blocks in latente Encodings umgewandelt und als Feature der jeweiligen Objekthypothese zugeordnet werden, wobei aus den individuellen Objekthypothesen und den zugeordneten Features in einem Fusions-Block durch lernbasiertes Clustern fusionierte Objekthypothesen erstellt werden, wobei in einem Tracking-Block Tracks der jeweiligen fusionierten Objekthypothesen gebildet werden, indem lernbasiert Zuordnungen zwischen den in einem aktuellen Zeitschritt ermittelten fusionierten Objekthypothesen und den in mehreren vorangegangenen Zeitschritten ermittelten fusionierten Objekthypothesen erstellt werden, wobei anhand der Tracks für die jeweiligen fusionierten Objekthypothesen Trajektorien prädiziert werden.

Vorteilhafterweise werden die Sensorrohdaten für eine Mehrzahl von Umfeldsensoren mehrerer Sensormodalitäten erfasst, individuell für jeden der Sensoren vorverarbeitet und daraus individuell für jeden Sensor die latenten Encodings bestimmt.

In einer Ausführungsform werden für einen zukünftigen Zeitpunkt prädizierte Trajektorien der fusionierten Objekthypothesen mit zu dem zukünftigen Zeitpunkt ermittelten wahren Trajektorien der fusionierten Objekthypothesen verglichen, um einen Prädiktionsfehler zu ermitteln, wobei der ermittelte Prädiktionsfehler zum Zwecke des Trainings zum Encoder-Block, zum Fusions-Block und zum Tracking-Block rückpropagiert wird.

In einer Ausführungsform werden als Sensormodalitäten zwei oder mehr aus der Gruppe Kamera, Radarsensor, Lidarsensor und Ultraschallsensor verwendet.

In einer Ausführungsform wird als Algorithmus für die Prädiktion der Trajektorien ein Transformer-Modell, ein Recurrent Neural Network oder ein Graph Neural Network verwendet.

In einer Ausführungsform werden segmentierte Sensorrohdaten einer Objekthypothese einer Kamera mit einem Convolutional Neural Network in latente Encodings umgewandelt, wobei die Gewichtungen im Convolutional Neural Network gelernt werden.

In einer Ausführungsform werden segmentierte Sensorrohdaten einer Objekthypothese eines Lidar-Sensors mit einem PointNet in latente Encodings umgewandelt, wobei die Gewichtungen im PointNet gelernt werden.

In einer Ausführungsform wird zum lernbasierten Bilden der fusionierten Objekthypothesen ein paarweises Zugehörigkeitsmaß zwischen Knoten in einem Graphen berechnet, wobei ein Graph Neural Network zur "Link-Prediction" und/oder Kanten-Klassifikation eingesetzt wird, so dass paarweise Wahrscheinlichkeiten entstehen, dass Knoten zum gleichen Objekt gehören, wobei auf Basis des Zugehörigkeitsmaßes mittels eines Standard-Clusteringalgorithmus Cluster der einzelnen Knoten gebildet werden.

In einer alternativen Ausführungsform wird zum lernbasierten Bilden der fusionierten Objekthypothesen ein gelernter Graph Clustering Algorithmus verwendet.

In einer Ausführungsform werden für jedes Cluster die Informationen aller Knoten mittels Pooling aggregiert, so dass pro fusionierter Objekthypothese eine aggregierte latente Repräsentation der Sensordaten und ein aggregierter Zustand resultiert.

In einer Ausführungsform wird für das Tracking ein Graph Neural Network für die "Link-Prediction" und/oder die Kanten-Klassifikation verwendet.

Lernbasierte Methoden zur Trajektorienprädiktion haben sich als besonders genau herausgestellt. Die vorliegende Erfindung stellt erstmals vor, wie Fusion, Tracking und Prädiktion in einem Ende-zu-Ende gelernten Ansatz durchgeführt werden können. Der gelernte Ende-zu-Ende Ansatz stellt sicher, dass relevante Sensorinformationen einzelner Objekthypothesen auch für die Prädiktion verwendet werden können.

Bei bekannten Methoden zur Trajektorienprädiktion, die auf Tracklets (zeitliche Abfolge von 2D x-y-Koordinaten der einzelnen Fahrzeuge in einer Szene) arbeiten, stammen die Tracklets von einem vorgeschaltenen Stack, welcher die Perzeption, das Tracking und die Fusion der einzelnen Agenten bereits erledigt. Nachteil dieser Ansätze ist, dass für die Prädiktion lediglich die Tracklets als Eingangsinformationen dienen. Im Unterscheid zu diesen Ansätzen gehen durch die vorliegende erfindungsgemäße Lösung sensorspezifische Informationen (z.B. die Farbe oder die Form eines erkannten Fahrzeugs) nicht verloren. Dies kann daher vorteilhaft sein, weil eine Form durchaus relevant für die Prädiktion sein kann: Sportwagen verhalten sich beispielsweise kinematisch anders als klassische Familienautos, weshalb das Vorhandensein einer solchen Information auch in der Prädiktion einen Vorteil haben kann.

Bei anderen Methoden zur Trajektorienprädiktion, die auf rohen Sensordaten einer einzelnen Sensormodalität arbeiten, wird die Objekterkennung und die Prädiktion Ende-zu-Ende gelernt. Das Problem ist dabei, dass diese Ansätze immer auf eine einzelne Sensormodalität beschränkt sind. Dies bedeutet, dass meist lediglich mittels eines Lidar-Scanners Objekte erkannt werden und diese dann über die Zeit verfolgt und prädiziert werden. Im Unterscheid zu diesen Ansätzen werden durch die vorliegende erfindungsgemäße Lösung wichtige Anforderungen an autonome Systeme erfüllt, indem mehrere Sensormodalitäten (Kamera, Lidar, Radar, Ultraschall) berücksichtigt werden. Alle diese Sensormodalitäten generieren wertvolle Informationen, die mittels der erfindungsgemäßen Lösung gleichzeitig verwendet werden können.

Der erfindungsgemäße Ansatz ermöglicht es, die Detektionen von beliebig vielen und unabhängigen Sensormodalitäten zu nutzen und diese Detektionen zu fusionieren, über die Zeit zu tracken und im Anschluss Prädiktionen zu generieren. Der lernbasierte Ende-zu-Ende Ansatz ermöglicht hierbei, dass relevante Sensorinformationen (es wird gelernt, welche Informationen für die Prädiktion relevant sind und wie diese extrahiert werden) auch für die Prädiktion verfügbar sind.

Der erfindungsgemäße Ansatz erlaubt eine Verbesserung der Trajektorienprädiktion durch die Verwendung relevanter Sensorinformationen in Form eines latenten Encodings. Welche Informationen relevant sind, wird hierbei gelernt und nicht durch eine von Hand erstellte Metrik bestimmt. Eine bessere Prädiktion führt dazu, dass das Verhalten des autonomen Fahrzeugs besser geplant werden kann. Der Fahrkomfort und die Sicherheit sind dadurch höher. Der Ende-zu-Ende Ansatz vermeidet das Training einzelner Komponenten und kann gesamtheitlich trainiert werden. Dies spart Trainingszeit. Eine Verwendung der erkannten Objekte verschiedener Sensormodalitäten ist problemlos möglich. Ferner ist eine Skalierung mit einer beliebigen Anzahl an Sensoren und mit beliebigen Sensormodalitäten möglich.

Ausführungsbeispiele der Erfindung werden im Folgenden anhand von Zeichnungen näher erläutert.

Dabei zeigen:
- Fig. 1: schematisch einen Ablauf eines Verfahrens zur Prädiktion von Trajektorien von Objekten in einer Umgebung eines Fahrzeugs,
- Fig. 2: schematisch einen Ablauf eines Verfahrens zur Prädiktion von Trajektorien von Objekten in einer Umgebung eines Fahrzeugs, und
- Fig. 3: schematisch ein Blockschaltbild eines Systems zur Prädiktion von Trajektorien von Objekten in einer Umgebung eines Fahrzeugs.

Einander entsprechende Teile sind in allen Figuren mit den gleichen Bezugszeichen versehen.

Die Erfindung betrifft ein Verfahren zur Prädiktion von Trajektorien von Objekten in der Umgebung eines Fahrzeugs. Das Fahrzeug weist eine Mehrzahl von Sensoren zur Umgebungserfassung auf, beispielsweise mindestens eine Kamera, mindestens einen Radarsensor, mindestens einen Lidarsensor und/oder mindestens einen Ultraschallsensor. Die Erfindung geht davon aus, dass die Sensorrohdaten der Sensoren vorverarbeitet werden. Diese Vorverarbeitung erfolgt individuell für jeden einzelnen der Sensoren (sensorindividuell). Bei der Vorverarbeitung werden Objekthypothesen erstellt. Eine Objekthypothese ist ein Datensatz, der Informationen über ein Objekt enthält, das aus den Sensorrohdaten extrahiert worden sind. Solche Informationen sind beispielsweise Informationen über die Art des Objekts (Fußgänger, Fahrzeug) und den Zustand des Objekts (Position des Objekts in einem für alle Sensoren gemeinsamen Koordinatensystem, Größe des Objekts). Teil der Objekthypothese sind ein Zustandsvektor und die Sensorrohdaten.

Aus von einer Kamera detektierten Daten werden beispielsweise Objekthypothesen ermittelt, welche ein Bild der detektierten Objekte und eine jeweilige Position des jeweiligen Objekts in einem Koordinatensystem umfassen. Aus von einem Radar-Sensor detektierten Daten werden beispielsweise Objekthypothesen ermittelt, welche reflektierte Punkte der Detektionen, die Positionen und die Geschwindigkeiten (Radar hat aufgrund des Doppler-Effekts auch die Möglichkeit Geschwindigkeiten zu messen) der detektierten Objekte in einem Koordinatensystem umfassen.

Eine Objekthypothese weist demnach zum einen den Zustandsvektor (folgend Zustand genannt, englisch "State") auf, der Informationen über die Objekthypothese beinhaltet. Der Zustand weist mindestens die Position und Größe der Objekthypothese (Position und Größe des Objekts, für das die Objekthypothese erstellt wird) in einem einheitlichen Koordinatensystem auf. Abhängig hiervon können weitere sensorspezifische Größen Teil des Zustands einer Objekthypothese sein. Radardetektionen können beispielsweise auch eine Geschwindigkeit besitzen. Zusätzlich werden auf Basis der Objekthypothese (und ihrer Größe), die Sensorrohdaten des Objekts segmentiert und der jeweiligen Objekthypothese zugeordnet. Bei einer Kamera oder einem Lidar-Sensor würden also beispielsweise die Pixel eines erkannten Fahrzeugs extrahiert werden (semantische Extrahierung der Pixel des erkannten Fahrzeugs).

Diese Vorverarbeitung wird in aufeinanderfolgenden Zeitschritten wiederholt.

Die zu der jeweiligen Objekthypothese zugehörigen Sensorrohdaten werden mittels eines lernbasierten Encoders in latente Encodings umgewandelt und als Feature der jeweiligen Objekthypothese zugeordnet.

Aus den individuellen Objekthypothesen und den zugeordneten Features werden durch (lernbasiertes) Clustern fusionierte Objekthypothesen erstellt.

In einem weiteren Schritt werden Tracks der jeweiligen fusionierten Objekthypothesen gebildet, indem (lernbasiert) Zuordnungen zwischen den im aktuellen Zeitschritt ermittelten fusionierten Objekthypothesen und den in mehreren vorangegangenen Zeitschritten ermittelten fusionierten Objekthypothesen erstellt werden.

In einem weiteren Schritt werden anhand der Tracks für die jeweiligen fusionieren Objekthypothesen Trajektorien prädiziert. Als Algorithmen für die Prädiktion der Trajektorien kommen beispielsweise in Frage: Transformer, RNN, GNN.

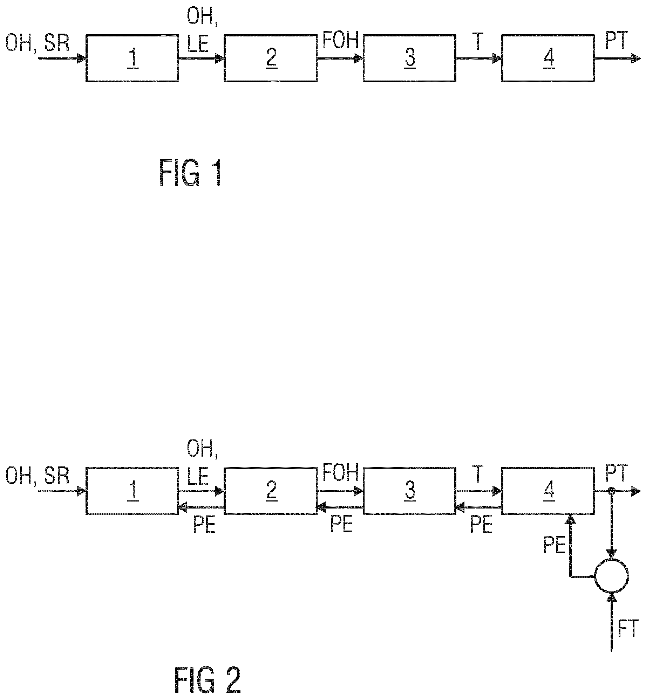

Figur 1 ist eine schematische Ansicht eines Ablaufs eines Verfahrens zur Prädiktion von Trajektorien von Objekten in einer Umgebung eines Fahrzeugs.

In einem Encoder-Block 1 werden aus den in der Vorverarbeitung ermittelten Objekthypothesen OH und den zugeordneten Sensorrohdaten SR latente Encodings LE gebildet. Die latenten Encodings LE werden dabei für jede der im aktuellen Zeitschritt ermittelten Objekthypothesen OH gebildet und der jeweiligen Objekthypothese OH als Feature zugeordnet. Die latenten Encodings LE sind Werte aus einer vorgegebenen begrenzten Wertemenge. Die Sensorrohdaten SR sind Daten aus einer nicht begrenzten Wertemenge. Durch das Encoding werden also Sensorrohdaten SR aus einer nicht begrenzten Wertemenge auf einen Wert aus einer begrenzten Wertemenge abgebildet. Für Objekthypothesen OH einer Kamera kann der lernbasierte Encoder-Block 1 beispielsweise wie folgt gestaltet sein: Segmentierte Sensorrohdaten SR einer Objekthypothese OH einer Kamera können beispielsweise mit einem Convolutional Neural Network (CNN) in latente Encodings LE umgewandelt werden. Gelernt werden hierbei die Gewichtungen im CNN. Für Objekthypothesen OH eines Lidar-Sensors kann der lernbasierte Encoder-Block 1 beispielsweise wie folgt ausgestaltet sein: Segmentierte Sensorrohdaten SR einer Objekthypothese OH eines Lidar-Sensors können beispielsweise mit einem PointNet in latente Encodings LE umgewandelt werden. Gelernt werden hierbei die Gewichtungen im PointNet.

Es resultiert also ein Zustand und ein gelerntes latentes Encoding LE für jede Objekthypothese OH zu jedem Zeitschritt. Der Inhalt dieser latenten Encodings LE kann vom Menschen nicht interpretiert werden. Es handelt sich hierbei um eine vom Modell während des Trainings selbst gelernte, möglichst geeignete Repräsentation der Sensorrohdaten SR.

In einem Fusions-Block 2 werden die im aktuellen Zeitschritt gebildeten Objekthypothesen OH sämtlicher Sensoren anhand der ihnen jeweils zugeordneten latenten Encodings LE geclustert und fusionierte Objekthypothesen FOH gebildet. Dabei wird zu jedem Zeitschritt ein Graph aufgebaut. In diesem Graph sind alle Objekthypothesen OH des Zeitschritts die Knoten. Jeder Knoten besitzt demnach einen Zustandsvektor und ein latentes Encoding LE, welches eine gelernte und geeignete Repräsentation der Sensordaten beinhaltet. Im Graph sind alle Knoten miteinander verbunden. Es handelt sich somit um einen vollständig verbundenen Graphen.

Die fusionierten Objekthypothesen FOH können lernbasiert durch Clustern im Graphen gebildet werden. Hierfür können zwei Varianten eingesetzt werden:
- Es wird ein paarweises Zugehörigkeitsmaß zwischen den Knoten im Graphen berechnet. Dieses Zugehörigkeitsmaß ist gelernt. Wie auch bereits beim lernbasierten Encoder-Block 1 wird das hierfür benötigte Fehlermaß erst nach der eigentlichen Trajektorienprädiktion bestimmt und dann bis zur Bestimmung des Zugehörigkeitsmaßes zurückpropagiert. Aufgrund der Graphstruktur können beispielsweise Graph Neural Networks zur "Link-Prediction" und/oder "Edge-Classification" eingesetzt werden. Hierdurch entstehen paarweise Wahrscheinlichkeiten, dass Knoten zum gleichen Objekt gehören. Auf Basis des Zugehörigkeitsmaßes können mittels eines Standard-Clusteringalgorithmus Cluster der einzelnen Knoten gebildet werden.
- Alternativ kann auch direkt ein gelernter Graph Clustering Algorithmus verwendet werden. Auch in dieser Alternativvariante wird das hierfür benötigte Fehlermaß erst nach der eigentlichen Trajektorienprädiktion bestimmt und dann bis zur Bestimmung des Zugehörigkeitsmaßes zurückpropagiert.

Während des Trainingsprozesses lernt das beschriebene lernbasierte Clustering somit, Objekthypothesen OH so in entsprechende Cluster zuzuweisen, dass der Fehler der Trajektorienprädiktion am niedrigsten wird. Dies tritt dann ein, wenn Objekthypothesen OH mehrerer Sensormodalitäten (z.B. Kamera und Lidar), die zum gleichen realen Objekt gehören, auch dem gleichen Cluster zugewiesen werden.

Für jedes Cluster werden die Informationen aller Knoten aggregiert (z.B. Pooling). Dies entspricht der Fusion mehrerer Objekthypothesen OH zu einer fusionierten Objekthypothese FOH. Es resultiert also pro fusionierter Objekthypothese FOH eine aggregierte latente Repräsentation der Sensordaten und ein aggregierter Zustand. Für den Zustand ist beispielsweise die Mittelwertsbildung als Aggregationsart denkbar.

In einem Tracking-Block 3 werden die fusionierten Objekthypothesen FOH des aktuellen Zeitschritts und die in vorherigen Zeitschritten ermittelten fusionierten Objekthypothesen FOH analysiert. Dabei wird über mehrere Zeitschritte hinweg ermittelt, welche fusionierten Objekthypothesen FOH der vorangegangenen Zeitschritte zu welcher der fusionierten Objekthypothesen FOH des aktuellen Zeitschritts zugehörig sind. Die einander zugehörigen fusionierten Objekthypothesen FOH aus den verschiedenen Zeitschritten bilden Tracks T der jeweiligen fusionierten Objekthypothesen FOH. Ein Track T beschreibt den zeitlichen Verlauf der jeweiligen fusionierten Objekthypothesen FOH. Zum Tracking kann ein Graph aufgebaut werden, der alle fusionierten Objekthypothesen FOH der vorherigen Zeitschritte als Knoten und alle fusionierten Objekthypothesen FOH des aktuellen Zeitschritts als Knoten beinhaltet. Featurevektoren der Knoten sind erneut die latenten Encodings LE und der Zustand. Im Graphen sind alle Knoten zweier aufeinander folgender Zeitschritte über Kanten miteinander verbunden. Nur für Knoten, die mit einer Kante verbunden sind, wird ein Zugehörigkeitsmaß ermittelt. Erneut können hierfür GNNs (Graph Neural Networks) für "Link-Prediction" und/oder "Edge-Classification" verwendet werden. Für jeden Knoten des aktuellen Zeitschritts können die Knoten der vorherigen Zeitschritte mit dem höchsten Zugehörigkeitsmaß bestimmt werden. Diese Knoten gehören dann zum Track T des gleichen Objekts. Es resultiert also ein Track T von fusionierten Objekthypothesen FOH. Dies bedeutet, dass die fusionierten Objekthypothesen FOH über mehrere Zeitschritte hinweg einander zugeordnet werden können, wodurch Tracklets entstehen. Dementsprechend entsteht ein Track T, dem zu jedem Zeitschritt über die jeweilige fusionierte Objekthypothese FOH auch der Zustand der jeweiligen fusionierten Objekthypothese FOH und deren latenter Featurevektor zugeordnet ist.

In einem Vorhersage-Block 4 werden die Trajektorien PT der fusionierten Objekthypothesen FOH anhand ihrer Tracks T für in der Zukunft liegende Zeitschritte prädiziert. Man erhält somit die prädizierten Trajektorien PT oder Tracks der verschiedenen fusionierten Objekthypothesen FOH.

Das Encoding im Encoder-Block 1, das Clustern im Fusions-Block 2 und das Bilden von Zugehörigkeiten im Tracking-Block 3 wird mit lernenden Algorithmen durchgeführt. Für das Training werden Trajektorien PT der fusionierten Objekthypothesen FOH für einen zukünftigen Zeitpunkt prädiziert und die Prädiktionen werden mit zu dem zukünftigen Zeitpunkt ermittelten wahren Trajektorien FT der fusionierten Objekthypothesen FOH verglichen, um einen Prädiktionsfehler PE zu ermitteln. Der ermittelte Prädiktionsfehler PE wird für das Training der Algorithmen zum Encoder-Block 1, zum Fusions-Block 2 und zum Tracking-Block 3 rückpropagiert. Die Algorithmen im Encoder-Block 1, im Fusions-Block 2 und im Tracking-Block 3 werden somit gleichzeitig Ende-zu-Ende optimiert. Über das latente Encoding LE hat der Trajektorienprädiktionsalgorithmus automatisch Zugriff auf relevante Sensorinformationen, die durch das Netz propagiert werden.

Figur 2 zeigt schematisch einen Ablauf des Verfahrens zur Prädiktion von Trajektorien von Objekten in einer Umgebung eines Fahrzeugs mit der beschriebenen Rückpropagierung des Prädiktionsfehlers PE. Der Prädiktionsfehler PE wird, wie bereits ausgeführt, ermittelt, indem die prädizierte Trajektorie PT und die wahre Trajektorie FT miteinander verglichen werden. Die Durchführung dieses Vergleichs ist in der Figur durch einen Kreis symbolisiert.

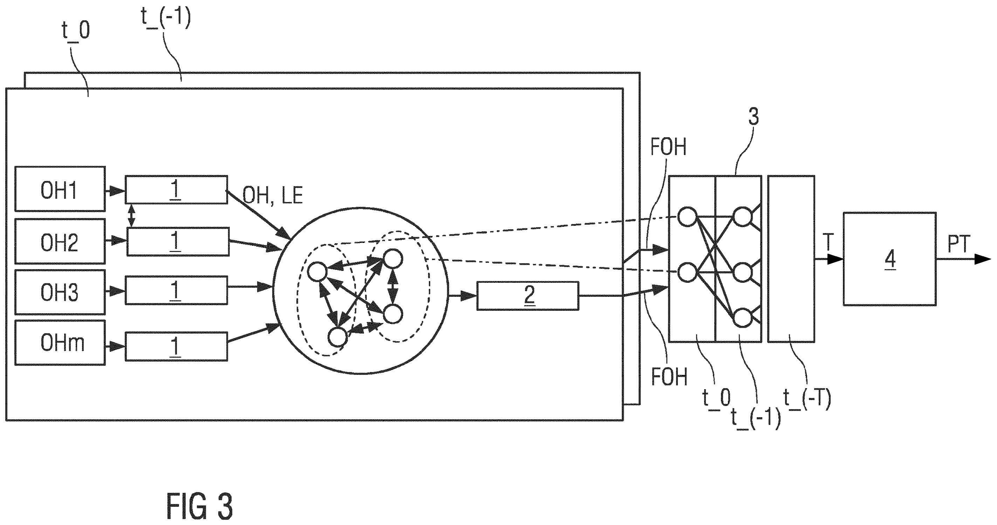

Figur 3 zeigt schematisch ein Blockschaltbild eines Systems zur Prädiktion von Trajektorien PT von Objekten in einer Umgebung eines Fahrzeugs.

Als Eingangswerte stehen Objekthypothesen OH1, OH2, OH3, OHm unterschiedlicher Sensoren zur Verfügung, die von gleicher oder unterschiedlicher Sensormodalität sein können, beispielsweise Kamera, Lidar, Radar und/oder Ultraschall. In einem jeweiligen lernbasierten Encoder-Block 1 werden aus Objekthypothesen OH1 bis OHm und den zugeordneten Sensorrohdaten SR für den aktuellen Zeitschritt t_0 latente Encodings LE gebildet. Dabei kann für Objekthypothesen OH1 bis OHm gleicher Sensormodalität ein und derselbe Encoder-Block 1 verwendet werden, gegebenenfalls mit geteilten Gewichten.

In einem Fusions-Block 2 werden die im aktuellen Zeitschritt t_0 gebildeten Objekthypothesen OH sämtlicher Sensoren anhand der ihnen jeweils zugeordneten latenten Encodings LE geclustert und fusionierte Objekthypothesen FOH gebildet.

In einem Tracking-Block 3 werden die fusionierten Objekthypothesen FOH des aktuellen Zeitschritts t_0 und die in vorherigen Zeitschritten t_(-1), t_(-T) ermittelten fusionierten Objekthypothesen FOH analysiert. Die einander zugehörigen fusionierten Objekthypothesen FOH aus den verschiedenen Zeitschritten t_0, t_(-1), t_(-T) bilden Tracks T der jeweiligen fusionierten Objekthypothesen FOH.

In einem Vorhersage-Block 4 werden die Trajektorien PT der fusionierten Objekthypothesen FOH anhand ihrer Tracks T für in der Zukunft liegende Zeitschritte prädiziert.

## Patentansprüche

1. Verfahren zur Prädiktion von Trajektorien von Objekten in einer Umgebung eines Fahrzeugs, wobei mittels Umfeldsensoren Sensorrohdaten (SR) einer Umgebung des Fahrzeugs erfasst werden, mit folgenden Schritten
**dadurch gekennzeichnet,**
- **dass** die Sensorrohdaten (SR) in einer Mehrzahl von aufeinanderfolgenden Zeitschritten (t_0, t_(-1), t_(-T)) vorverarbeitet werden, um Objekthypothesen (OH) zu erstellen,
- **dass** auf Basis der Objekthypothesen (OH) die Sensorrohdaten (SR) segmentiert und der jeweiligen Objekthypothese (OH) zugeordnet werden,
- **dass** die zu der jeweiligen Objekthypothese (OH) zugehörigen Sensorrohdaten (SR) mittels eines lernbasierten Encoder-Blocks (1) in latente Encodings (LE) umgewandelt und als Feature der jeweiligen Objekthypothese (OH) zugeordnet werden,
- **dass** aus den individuellen Objekthypothesen (OH) und den zugeordneten Features in einem Fusions-Block (2) durch lernbasiertes Clustern fusionierte Objekthypothesen (FOH) erstellt werden,
- **dass** in einem Tracking-Block (3) Tracks (T) der jeweiligen fusionierten Objekthypothesen (FOH) gebildet werden, indem lernbasiert Zuordnungen zwischen den in einem aktuellen Zeitschritt (t_0) ermittelten fusionierten Objekthypothesen (FOH) und den in mehreren vorangegangenen Zeitschritten (t_(-1), t_(-T)) ermittelten fusionierten Objekthypothesen (FOH) erstellt werden,
- **dass** anhand der Tracks (T) der jeweiligen fusionierten Objekthypothesen (FOH) Trajektorien (PT) prädiziert werden.

2. Verfahren nach Anspruch 1,
**dadurch gekennzeichnet, dass** die Sensorrohdaten (SR) für eine Mehrzahl von Umfeldsensoren mehrerer Sensormodalitäten erfasst, individuell für jeden der Sensoren vorverarbeitet und daraus individuell für jeden Sensor die latenten Encodings (LE) bestimmt werden, wobei als Sensormodalitäten zwei oder mehr aus der Gruppe Kamera, Radarsensor, Lidarsensor und Ultraschallsensor verwendet werden.

3. Verfahren nach Anspruch 1 oder 2,
**dadurch gekennzeichnet, dass** für einen zukünftigen Zeitpunkt prädizierte Trajektorien (PT) der fusionierten Objekthypothesen (FOH) mit zu dem zukünftigen Zeitpunkt ermittelten wahren Trajektorien (FT) der fusionierten Objekthypothesen (FOH) verglichen werden, um einen Prädiktionsfehler (PE) zu ermitteln, wobei der ermittelte Prädiktionsfehler (PE) zum Zwecke des Trainings zum Encoder-Block (1), zum Fusions-Block (2) und zum Tracking-Block (3) rückpropagiert wird.

4. Verfahren nach einem der vorhergehenden Ansprüche,
**dadurch gekennzeichnet, dass** als Algorithmus, mit dem anhand der Tracks (T) der jeweiligen fusionierten Objekthypothesen (FOH) die Trajektorien (PT) prädiziert werden. ein Transformer-Modell, ein Recurrent Neural Network oder ein Graph Neural Network verwendet wird.

5. Verfahren nach einem der vorhergehenden Ansprüche,
**dadurch gekennzeichnet, dass** segmentierte Sensorrohdaten (SR) einer Objekthypothese (OH) einer Kamera mit einem Convolutional Neural Network in die latenten Encodings (LE) umgewandelt werden, wobei die Gewichtungen im Convolutional Neural Network gelernt werden.

6. Verfahren nach einem der vorhergehenden Ansprüche,
**dadurch gekennzeichnet, dass** segmentierte Sensorrohdaten (SR) einer Objekthypothese (OH) eines Lidar-Sensors mit einem PointNet in die latenten Encodings (LE) umgewandelt werden, wobei die Gewichtungen im PointNet gelernt werden.

7. Verfahren nach einem der vorhergehenden Ansprüche,
**dadurch gekennzeichnet, dass** in dem Schritt, bei dem durch lernbasiertes Clustern fusionierte Objekthypothesen (FOH) erstellt werden, ein paarweises Zugehörigkeitsmaß zwischen verschiedene Zeitschritte der Objekthypothesen verbindenden Knoten in einem Graphen berechnet wird, wobei ein Graph Neural Network zur "Link-Prediction" und/oder Kanten-Klassifikation eingesetzt wird, so dass paarweise Wahrscheinlichkeiten entstehen, dass Knoten zum gleichen Objekt gehören, wobei auf Basis des Zugehörigkeitsmaßes mittels eines Standard-Clusteringalgorithmus Cluster der einzelnen Knoten gebildet werden.

8. Verfahren nach einem der Ansprüche 1 bis 6,
**dadurch gekennzeichnet, dass** in dem Schritt, bei dem durch lernbasiertes Clustern fusionierte Objekthypothesen (FOH) erstellt werden, ein gelernter Graph Clustering Algorithmus verwendet wird.

9. Verfahren nach Anspruch 7,
**dadurch gekennzeichnet, dass** für jedes der Cluster die Informationen aller Knoten mittels Pooling aggregiert werden, so dass pro fusionierter Objekthypothese (FOH) eine aggregierte latente Repräsentation der Sensordaten und ein aggregierter Zustand resultiert.

10. Verfahren nach einem der vorhergehenden Ansprüche,
**dadurch gekennzeichnet, dass** in dem Schritt, bei dem die Tracks (T) gebildet werden, ein Graph Neural Network für die "Link-Prediction" und/oder die Kanten-Klassifikation verwendet wird.

## Claims

1. Method for predicting trajectories of objects in the surroundings of a vehicle, sensor raw data (SR) of the surroundings of the vehicle being acquired using environmental sensors, comprising the following steps **characterized**
- **in that** the sensor raw data (SR) are preprocessed in a plurality of successive time steps (t_0, t_(-1), t_(-T)) to create object hypotheses (OH),
- **in that** on the basis of the object hypotheses (OH), the sensor raw data (SR) are segmented and assigned to the particular object hypothesis (OH),
- **in that** the sensor raw data (SR) associated with the particular object hypothesis (OH) are converted into latent encodings (LE) using a learning-based encoder block (1) and assigned as a feature of the particular object hypothesis (OH),
- **in that** from the individual object hypotheses (OH) and the assigned features, fused object hypotheses (FOH) are created in a fusion block (2) by learning-based clustering,
- **in that** tracks (T) of the respective fused object hypotheses (FOH) are formed in a tracking block (3) by creating learning-based assignments between the fused object hypotheses (FOH) determined in a current time step (t_0) and the fused object hypotheses (FOH) determined in multiple previous time steps (t_(-1), t_(-T)),
- **in that** trajectories (PT) are predicted on the basis of the tracks (T) of the respective fused object hypotheses (FOH).

2. Method according to claim 1,
**characterized in that** the sensor raw data (SR) for a plurality of environmental sensors of multiple sensor modalities are acquired, pre-processed individually for each of the sensors, and the latent encodings (LE) are determined individually therefrom for each sensor, two or more from the group camera, radar sensor, lidar sensor and ultrasonic sensor being used as sensor modalities.

3. Method according to claim 1 or 2,
**characterized in that** predicted trajectories (PT) of the fused object hypotheses (FOH) for a future time point are compared with true trajectories (FT) of the fused object hypotheses (FOH) determined at the future time point in order to determine a prediction error (PE), the determined prediction error (PE) being backpropagated to the encoder block (1), the fusion block (2) and the tracking block (3) for the purpose of training.

4. Method according to any of the preceding claims,
**characterized in that** a transformer model, a recurrent neural network, or a graph neural network is used as an algorithm to predict the trajectories (PT) on the basis of the tracks (T) of the respective fused object hypotheses (FOH).

5. Method according to any of the preceding claims,
**characterized in that** segmented sensor raw data (SR) of an object hypothesis (OH) of a camera are converted into the latent encodings (LE) using a convolutional neural network, the weights in the convolutional neural network being learned.

6. Method according to any of the preceding claims,
**characterized in that** segmented sensor raw data (SR) of an object hypothesis (OH) of a lidar sensor are converted into the latent encodings (LE) using a PointNet, the weights in the PointNet being learned.

7. Method according to any of the preceding claims,
**characterized in that** in the step where fused object hypotheses (FOH) are created through learning-based clustering, a pairwise membership measure is calculated between different time steps of the nodes connecting the object hypotheses in a graph, using a graph neural network for link prediction and/or edge classification, so that pairwise probabilities arise that nodes belong to the same object, clusters of the individual nodes being formed on the basis of the membership measure using a standard clustering algorithm.

8. Method according to any of claims 1 to 6,
**characterized in that** in the step where fused object hypotheses (FOH) are created through learning-based clustering, a learned graph clustering algorithm is used.

9. Method according to claim 7,
**characterized in that** for each of the clusters, the information from all nodes is aggregated using pooling, resulting in an aggregated latent representation of the sensor data and an aggregated state for each fused object hypothesis (FOH).

10. Method according to any of the preceding claims,
**characterized in that** in the step where the tracks (T) are formed, a graph neural network is used for the link prediction and/or the edge classification.

## Revendications

1. Procédé permettant la prédiction de trajectoires d'objets dans un environnement d'un véhicule, dans lequel des données brutes de capteur (SR) relatives à un environnement du véhicule sont recueillies à l'aide de capteurs d'environnement, comportant les étapes suivants, **caractérisé en ce**
- **que** les données brutes de capteur (SR) sont prétraitées sur une pluralité d'intervalles de temps successifs (t_0, t_(-1), t_(-T)) pour générer des hypothèses d'objet (OH),
- **que**, sur la base des hypothèses d'objet (OH), les données brutes de capteur (SR) sont segmentées et associées à l'hypothèse d'objet (OH) respective,
- **que** les données brutes de capteur (SR) associées à l'hypothèse d'objet (OH) correspondante sont converties en encodages latents (LE) à l'aide d'un bloc encodeur (1) basé sur l'apprentissage et sont associées à l'hypothèse d'objet (OH) respective en tant que caractéristique,
- **que** des hypothèses d'objet fusionnées (FOH) sont générées, à partir des hypothèses d'objet (OH) individuelles et des caractéristiques associées, dans un bloc de fusion (2) par regroupement basé sur l'apprentissage,
- **que** des pistes (T) pour les hypothèses d'objet fusionnées (FOH) respectives sont formées dans un bloc de suivi (3) en générant, par apprentissage, des associations entre les hypothèses d'objet fusionnées (FOH) déterminées dans un intervalle de temps actuel (t_0) et les hypothèses d'objet fusionnées (FOH) déterminées à plusieurs intervalles de temps précédents (t_(-1), t_(-T)),
- **que** des trajectoires (PT) sont prédites à partir des pistes (T) des hypothèses d'objet fusionnées (FOH) respectives.

2. Procédé selon la revendication 1,
**caractérisé en ce que** les données brutes de capteur (SR) sont recueillies pour une pluralité de capteurs d'environnement de plusieurs modalités de détection, sont prétraitées individuellement pour chacun des capteurs et **en ce que**, à partir de ce prétraitement, les encodages latents (LE) sont déterminés individuellement pour chaque capteur, dans lequel deux ou plusieurs dans le groupe caméra, capteur radar, capteur lidar et capteur à ultrasons sont utilisés comme modalités de détection.

3. Procédé selon la revendication 1 ou 2,
**caractérisé en ce que** les trajectoires prédites (PT) des hypothèses d'objet fusionnées (FOH) pour un moment futur sont comparées aux trajectoires réelles (FT), déterminées au moment futur, des hypothèses d'objet fusionnées (FOH), pour déterminer une erreur de prédiction (PE), dans lequel l'erreur de prédiction (PE) déterminée est rétropropagée, à des fins d'apprentissage, vers le bloc encodeur (1), le bloc de fusion (2) et le bloc de suivi (3).

4. Procédé selon l'une des revendications précédentes,
**caractérisé en ce que** l'algorithme utilisé pour prédire les trajectoires (PT) à partir des pistes (T) des hypothèses d'objet fusionnées (FOH) respectives est un modèle Transformer, un réseau neuronal récurrent ou un réseau neuronal sur graphe.

5. Procédé selon l'une des revendications précédentes,
**caractérisé en ce que** les données brutes de capteur (SR) segmentées issues d'une hypothèse d'objet (OH) d'une caméra sont converties en encodages latents (LE) à l'aide d'un réseau neuronal convolutif, dans lequel les pondérations du réseau neuronal convolutif sont apprises.

6. Procédé selon l'une des revendications précédentes,
**caractérisé en ce que** les données brutes de capteur (SR) segmentées d'une hypothèse d'objet (OH) d'un capteur lidar sont converties en encodages latents (LE) à l'aide d'un PointNet, dans lequel les pondérations du PointNet sont apprises.

7. Procédé selon l'une des revendications précédentes,
**caractérisé en ce que**, à l'étape de génération des hypothèses d'objet fusionnées (FOH) par regroupement basé sur l'apprentissage, une mesure d'appartenance par paires est calculée entre les nœuds reliant différents intervalles de temps des hypothèses d'objet dans un graphe, dans lequel un réseau neuronal de graphe est utilisé pour la « prédiction de liens » et/ou la classification des arêtes, en sorte qu'il émerge des probabilités par paires indiquant que des nœuds appartiennent au même objet, dans lequel des regroupements des différents nœuds sont formés à l'aide d'un algorithme de regroupement standard en fonction de la mesure d'appartenance.

8. Procédé selon l'une des revendications 1 à 6,
**caractérisé en ce que**, à l'étape de génération des hypothèses d'objet fusionnées (FOH) par regroupement basé sur l'apprentissage, un algorithme de regroupement de graphes appris est utilisé.

9. Procédé selon la revendication 7,
**caractérisé en ce que**, pour chacun des regroupements, les informations de tous les nœuds sont agrégées par mise en commun, en sorte qu'il en résulte, pour chaque hypothèse d'objet fusionnée (FOH), une représentation latente agrégée des données de capteur et un état agrégé.

10. Procédé selon l'une des revendications précédentes,
**caractérisé en ce que**, à l'étape de formation des pistes (T), un réseau neuronal de graphe est utilisé pour la « prédiction de liens » et/ou la classification des arêtes.
